# EUROPEAN PATENT APPLICATION

(11) **EP 4 137 545 A1**
(43) Date of publication of application: **22.02.2023**
(21) Application number: 21787659.8
(22) Date of filing: 25.02.2021
(51) Int. Cl.: C08L 83/07, C08K 3/36, C08K 5/14, C08K 5/5435, C08K 5/5465, C08L 83/05, C09J 11/04, C09J 11/06, C09J 183/07

(54) **SELF-ADHESIVE MILLABLE SILICONE RUBBER COMPOSITION**

(30) Priority: 14.04.2020 JP 2020072058
(71) Applicant: SHIN-ETSU CHEMICAL CO., LTD., Tokyo 1000005 (JP)
(72) Inventor: HOTTA Masakatsu, Annaka-shi, Gunma 379-0224 (JP)
(74) Representative: Sonnenhauser, Thomas Martin
(86) International application number: PCT/JP2021/006956
(87) International publication number: WO 2021/210273

(57) **Abstract**

The present invention is an self-adhesive millable silicone rubber composition containing: 100 parts by mass of (A) an organopolysiloxane having at least two alkenyl groups bonded to silicon atoms per molecule and an average polymerization degree of 100 or more; 5 to 50 parts by mass of (B) a reinforcing silica having a specific surface area of 50 m²/g or more; 0.1 to 5 parts by mass of (C) an organosilicon compound having an epoxy group and an alkoxy group per molecule; 0.1 to 5 parts by mass of (D) an organosilicon compound having an isocyanate group and an alkoxy group per molecule; and an effective curing amount of (E) a curing agent. The content of an organosilicon compound having a siloxane bond and a benzene ring per molecule is 0 to 0.1 parts by mass, and the content of an organosilicon compound having a siloxane bond and an epoxy group per molecule is 0 to 0.1 parts by mass. This makes it possible to provide a self-adhesive millable silicone rubber composition excellent in productivity and capable of forming a cured product excellent in adhesion.

## Description

### TECHNICAL FIELD

The present invention relates to a self-adhesive millable silicone rubber composition.

### BACKGROUND ART

Since silicone rubber is excellent in heat resistance, cold resistance, weather resistance, electric insulation, safety, and so forth, it is widely used in any field, for example, automotive parts such as connector seals and spark plug boots, electric and electronic parts such as copier rolls and microwave oven gaskets, and building parts such as sealants, as well as nipples for nursing bottles and diving gears. In many of these various applications, silicone rubber is used as articles combined with organic resins, metals, etc. When a primer or an adhesive is applied on the interface between silicone rubber and an organic resin or metal, this increases the number of manufacturing steps. Accordingly, the use of a self-adhesive silicone rubber composition which is prepared by adding an adhesive to a silicone rubber composition is considered as an effective means.

Examples of the self-adhesive silicone rubber composition prepared by adding an adhesive to a silicone rubber composition can include: an addition-crosslinking silicone rubber composition containing an organohydrogenpolysiloxane having a Si-H group and a SiC₆H₅ group in the same molecule and 3-glycidoxypropyltrimethoxysilane (Patent Document 1); and an addition-crosslinking silicone rubber composition containing an organohydrogenpolysiloxane having an aromatic ring in a molecule and an organosilicon compound having an epoxy group or an isocyanate group per molecule (Patent Document 2).

As described in the documents listed here, conventional self-adhesive silicone rubber compositions have such features that the compositions are addition-crosslinking silicone rubber compositions each containing, as essential components, an organohydrogenpolysiloxane having an aromatic ring and an organosilicon compound having an epoxy group or an isocyanate group, and further that the compositions are liquid silicone rubbers. Heat-curable silicone rubbers are roughly classified into: millable-type rubber, which means kneadable with a two-roll mill; and liquid-type rubber, which is often used in injection molding systems. A planetary mixer is generally used in producing silicone rubber of liquid-type rubber, so that there are no problems of handleability of the raw materials, particularly adhesiveness. In contrast, regarding millable type, in a step of adding raw materials, if a raw material having adhesiveness is added onto a two-roll mill, the rubber compound softens, and the material firmly adheres to the rolls, so that blending requires a lot of time.

Examples of the raw material that inhibits the rolling operation due to such adhesiveness can include organohydrogenpolysiloxanes having an aromatic ring in a molecule as described in Patent Documents 1 and 2. Moreover, organosilicon compounds having a siloxane bond and an aromatic ring in a molecule and organosilicon compounds having a siloxane bond and an epoxy group in a molecule as exemplified in Patent Document 2 also exhibit strong adhesiveness, so that blending with a two-roll mill is difficult.

### CITATION LIST

### PATENT LITERATURE

Patent Document 1: JP 4095769 B
Patent Document 2: JP 5402800 B

### SUMMARY OF INVENTION

### TECHNICAL PROBLEM

The present invention has been made in view of the above circumstances. An object of the present invention is to provide a self-adhesive millable silicone rubber composition blendable with a roll mill, excellent in productivity, and capable of forming a cured product excellent in adhesion to organic resin and metal.

### SOLUTION TO PROBLEM

To achieve the object, the present invention provides a self-adhesive millable silicone rubber composition comprising:
100 parts by mass of (A) an organopolysiloxane having at least two alkenyl groups bonded to silicon atoms per molecule and an average polymerization degree of 100 or more;
5 to 50 parts by mass of (B) a reinforcing silica having a specific surface area of 50 m²/g or more;
0.1 to 5 parts by mass of (C) an organosilicon compound having an epoxy group and an alkoxy group per molecule;
0.1 to 5 parts by mass of (D) an organosilicon compound having an isocyanate group and an alkoxy group per molecule; and
an effective curing amount of (E) a curing agent,
wherein a content of an organosilicon compound which has a siloxane bond and a benzene ring per molecule, and which is an ingredient different from the components (A) to (E), is 0 to 0.1 parts by mass, and
a content of an organosilicon compound which has a siloxane bond and an epoxy group per molecule, and which is an ingredient different from the components (A) to (E), is 0 to 0.1 parts by mass.

In the inventive self-adhesive millable silicone rubber composition, the essential components are: an organopolysiloxane having at least two alkenyl groups bonded to silicon atoms per molecule (component (A)); a reinforcing silica having a specific surface area of 50 m²/g or more (component (B)); an organosilicon compound having an epoxy group and an alkoxy group per molecule (component (C)); an organosilicon compound having an isocyanate group and an alkoxy group per molecule (component (D)); and a curing agent (component (E)). These components are not substantially blended with an organosilicon compound having a siloxane bond and a benzene ring per molecule or an organosilicon compound having a siloxane bond and an epoxy group per molecule, the organosilicon compounds being different from the components (A) to (E). These enable the self-adhesive millable silicone rubber composition to be excellent in productivity and to form a cured product heat-curable by any of addition crosslinking and organic-peroxide crosslinking, thereby exhibiting excellent adhesion.

The component (C) is preferably one or more selected from 3-glycidoxypropylmethyldimethoxysilane, 3-glycidoxypropylmethyldiethoxysilane, 3-glycidoxypropyltrimethoxysilane, and 3-glycidoxypropyltriethoxysilane.

Incorporating such material(s) as the component (C) enables the self-adhesive millable silicone rubber composition to form a cured product that exhibits more excellent adhesion.

The component (D) is preferably one or more selected from 3-isocyanatepropylmethyldimethoxysilane, 3-isocyanatepropylmethyldiethoxysilane, 3-isocyanatepropyltrimethoxysilane, and 3-isocyanatepropyltriethoxysilane.

Incorporating such material(s) as the component (D) enables the self-adhesive millable silicone rubber composition to form a cured product that exhibits more excellent adhesion.

The component (E) may be an organic peroxide.

Incorporating the component (E) that is an organic peroxide makes the self-adhesive millable silicone rubber composition capable of crosslinking with the organic peroxide.

Alternatively, the component (E) may be a combination of an organohydrogenpolysiloxane and a platinum group metal catalyst.

Incorporating the component (E) as described above makes the self-adhesive millable silicone rubber composition capable of crosslinking by addition reaction.

An adhesion target preferably comprises any one or more of polyamide resins, polyester resins, and stainless steels.

A cured product of the inventive self-adhesive millable silicone rubber composition can favorably adhere to various organic resin and metal substrates, and can particularly favorably adhere to polyamide resins, polyester resins, and stainless steels.

### ADVANTAGEOUS EFFECTS OF INVENTION

As described above, the inventive self-adhesive millable silicone rubber composition is blendable with a roll mill, excellent in productivity, and capable of forming a cured product excellent in adhesion to organic resin and metal, for example.

### DESCRIPTION OF EMBODIMENTS

As noted above, there have been demands for the development of a self-adhesive millable silicone rubber composition excellent in productivity and capable of forming a cured product excellent in adhesion, for example, to organic resin and metal.

The present inventor has earnestly studied to achieve the above object and consequently found that when an organopolysiloxane having at least two alkenyl groups bonded to silicon atoms per molecule, a reinforcing silica having a specific surface area of 50 m²/g or more, an organosilicon compound having an epoxy group and an alkoxy group per molecule, an organosilicon compound having an isocyanate group and an alkoxy group per molecule, and a curing agent are incorporated as essential components and are not substantially blended with an organosilicon compound having a siloxane bond and a benzene ring per molecule or an organosilicon compound having a siloxane bond and an epoxy group per molecule which are different from these components, the resulting self-adhesive millable silicone rubber composition is excellent in productivity and can form a cured product heat-curable by any of addition crosslinking and organic-peroxide crosslinking, thereby excellent in adhesion. This finding has led to the present invention.

Specifically, the present invention is a self-adhesive millable silicone rubber composition comprising:
100 parts by mass of (A) an organopolysiloxane having at least two alkenyl groups bonded to silicon atoms per molecule and an average polymerization degree of 100 or more;
5 to 50 parts by mass of (B) a reinforcing silica having a specific surface area of 50 m²/g or more;
0.1 to 5 parts by mass of (C) an organosilicon compound having an epoxy group and an alkoxy group per molecule;
0.1 to 5 parts by mass of (D) an organosilicon compound having an isocyanate group and an alkoxy group per molecule; and
an effective curing amount of (E) a curing agent,
wherein a content of an organosilicon compound which has a siloxane bond and a benzene ring per molecule, and which is an ingredient different from the components (A) to (E), is 0 to 0.1 parts by mass, and
a content of an organosilicon compound which has a siloxane bond and an epoxy group per molecule, and which is an ingredient different from the components (A) to (E), is 0 to 0.1 parts by mass.

Hereinafter, the present invention will be described in detail, but the present invention is not limited thereto.

### <Self-Adhesive Millable Silicone Rubber Composition>

The inventive self-adhesive millable silicone rubber composition contains the aforementioned components (A) to (E) as essential components. Meanwhile, in the inventive self-adhesive millable silicone rubber composition, a content of an organosilicon compound which has a siloxane bond and a benzene ring per molecule, and which is an ingredient different from the components (A) to (E), is 0 to 0.1 parts by mass; and a content of an organosilicon compound which has a siloxane bond and an epoxy group per molecule, and which is an ingredient different from the components (A) to (E), is 0 to 0.1 parts by mass.

Hereinbelow, each component of the inventive self-adhesive millable silicone rubber composition will be described individually.

### [(A) Organopolysiloxane]

The organopolysiloxane containing at least two silicon-atom-bonded alkenyl groups in a molecule can act as a main agent (base polymer) for forming a cured silicone rubber product. As this organopolysiloxane, it possible to use one, for example, shown by the following average composition formula (I) and containing at least two (for example 2 to 100) alkenyl groups bonded to silicon atoms per molecule. As the component (A), one kind of the organopolysiloxane may be used singly, or a combination of two or more kinds of the organopolysiloxane can also be used as appropriate.

R¹ₐSiO_{(4-a)/2} (I)

In the formula, R¹'s are identical to or different from one another and each represent an unsubstituted or substituted monovalent hydrocarbon group having 1 to 10, preferably 1 to 8, carbon atoms; "a" represents a positive number in a range of 1.5 to 2.8, preferably 1.8 to 2.5, more preferably 1.9 to 2.1.

In the formula (I), R¹'s may be identical to or different from one another, and are each an unsubstituted or substituted monovalent hydrocarbon group having 1 to 10 carbon atoms. Specific examples thereof include alkyl groups, such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups, such as a phenyl group, a tolyl group, a xylyl group, and a naphthyl group; aralkyl groups, such as a benzyl group, a phenylethyl group, and a phenylpropyl group; alkenyl groups, such as a vinyl group, an allyl group, a propenyl group, an isopropenyl group, a butenyl group, a hexenyl group, a cyclohexenyl group, and an octenyl group; groups obtained from these groups by substituting some or all of hydrogen atoms thereof with a halogen atom, such as fluorine, bromine, or chlorine, a cyano group, etc., for example, a chloromethyl group, a chloropropyl group, a bromoethyl group, a trifluoropropyl group, and a cyanoethyl group; etc. Preferably, methyl groups account for 90% or more of all R¹'s by mole, particularly preferably account for all R¹'s excluding alkenyl groups.

Moreover, the organopolysiloxane contains, per molecule, at least two alkenyl groups (each of which preferably has 2 to 8 carbon atoms, more preferably 2 to 6 carbon atoms, and is further preferably a vinyl group) bonded to silicon atoms such that the alkenyl group content is preferably 1.0×10⁻⁶ mol/g to 5.0×10⁻³ mol/g, particularly preferably 3.0×10⁻⁶ mol/g to 1.0×10⁻³ mol/g. With the alkenyl group amount of 1.0×10⁻⁶ mol/g to 5.0×10⁻³ mol/g, sufficient rubber hardness is achieved, enabling sufficient strength. Moreover, with the alkenyl group amount of 1.0×10⁻⁶ mol/g to 5.0×10⁻³ mol/g, appropriate crosslinking density is achieved, and the resultant is prevented from becoming brittle rubber.

Note that the alkenyl groups may be bonded to silicon atoms at ends of the molecular chain, may be bonded to silicon atoms at sides of the molecular chain, or may be bonded at both. Preferably, the organopolysiloxane has alkenyl groups bonded to at least silicon atoms at both ends of the molecular chain.

Further, basically, as the structure of this organopolysiloxane, it preferably has a linear structure, but may have a branched structure, cyclic structure, three-dimensional network structure, or the like. The molecular weight is not particularly limited, and may be such that the resulting usable organopolysiloxane ranges from a liquid with low viscosity at room temperature (25°C) to crude rubber with high viscosity. The organopolysiloxane has an average polymerization degree of 100 or more, preferably 100 to 20,000, more preferably 200 to 10,000. If the average polymerization degree is less than 100, the viscosity of the silicone rubber composition is so low that sufficient shearing force is not applied during stirring, and a reinforcing silica of the component (B) may not be dispersed well. When the average polymerization degree is 20,000 or less, the silicone rubber composition has excellent moldability and appropriate viscosity. Note that the average polymerization degree can be determined as weight-average polymerization degree in terms of polystyrene by gel permeation chromatography (GPC). Additionally, this organopolysiloxane may be a mixture of two or kinds of the organopolysiloxane which differ in molecular structure and/or weight-average polymerization degree.

### [(B) Reinforcing Silica]

The reinforcing silica of the component (B) is essential to impart sufficient strength to the silicone rubber. Examples thereof include fumed silica (dry silica), precipitated silica (wet silica), etc.

One kind of the component (B) may be used singly, or two or more kinds thereof may be used in combination. The silica has a specific surface area of 50 m²/g or more, preferably 50 to 400 m²/g, more preferably 100 to 350 m²/g, which are according to the BET method. If the specific surface area is less than 50 m²/g, mechanical strength may be insufficiently imparted. When the specific surface area is 400 m²/g or less, the silicone rubber composition can have appropriate viscosity and excellent handleability.

Such reinforcing silicas may be used without modification, but may be treated with a surface hydrophobizing agent in advance for use. Alternatively, the reinforcing silicas are preferably used after treatment of adding a surface treatment agent when kneaded together with the component (A). As such surface treatment agents, any known materials can be used, such as alkylalkoxysilanes, alkylchlorosilanes, alkylsilazanes, silane coupling agents, titanate-based treatment agents, and fatty acid esters. One of these may be used, or two or more thereof may be used simultaneously or at different timings.

In the silicone rubber composition, the reinforcing silica (B) is blended in an amount of 5 to 50 parts by mass, more preferably 10 to 30 parts by mass, based on 100 parts by mass of the component (A). When the amount of the component (B) blended is 5 parts by mass or more, more sufficient rubber strength is obtained. Meanwhile, if the amount exceeds 50 parts by mass, the silicone rubber composition has such a high viscosity that the handleability may be lowered.

The component (A), the component (B), and an optional surface treatment agent can constitute the base silicone rubber compound.

[(C) Organosilicon Compound having Epoxy Group and Alkoxy Group per Molecule]

The organosilicon compound as the component (C) can act as an adhesive aid, for example.

Specific examples of the organosilicon compound as the component (C) can include 3-glycidoxypropylmethyldimethoxysilane, 3-glycidoxypropylmethyldiethoxysilane, 3-glycidoxypropyltrimethoxysilane, and 3-glycidoxypropyltriethoxysilane. As the component (C), one compound can be used singly, or a combination of two or more of the compounds can be used as appropriate.

The component (C) is blended in an amount of 0.1 to 5 parts by mass, more preferably 0.1 to 3 parts by mass, based on 100 parts by mass of the component (A). If the amount of the component (C) blended is less than 0.1 parts by mass, sufficient adhesion may not be exhibited. If the amount exceeds 5 parts by mass, the material viscosity becomes so low that the handleability as a millable compound may be lowered.

### [(D) Organosilicon Compound having Isocyanate Group and Alkoxy Group per Molecule]

The organosilicon compound as the component (D) can act as an adhesive aid.

Specific examples of the organosilicon compound as the component (D) can include 3-isocyanatepropylmethyldimethoxysilane, 3-isocyanatepropylmethyldiethoxysilane, 3-isocyanatepropyltrimethoxysilane, and 3-isocyanatepropyltriethoxysilane. As the component (D), one compound can be used singly, or a combination of two or more of the compounds can be used as appropriate.

The component (D) is blended in an amount of preferably 0.1 to 5 parts by mass, more preferably 0.1 to 3 parts by mass, based on 100 parts by mass of the component (A). If the amount of the component (D) blended is less than 0.1 parts by mass, sufficient adhesion may not be exhibited. If the amount exceeds 5 parts by mass, the material viscosity becomes so low that the operability with two rolls may be lowered.

### [(E) Curing Agent]

Examples of the component (E) used in the present invention can include both of organic peroxide-based curing agents (organic peroxides) and addition-reaction curing agents (addition-crosslinking curing agents).

Examples of the organic peroxide-based curing agents include, but are not particularly limited to, benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butyl peroxy)hexane, 1,3-bis(t-butylperoxyisopropyl)benzene, t-butylcumyl peroxide, di-t-butyl peroxide, 2,5-bis(t-butyl peroxy)-2,5-dimethyl-3-hexyne, etc. One of these may be used singly, or two or more thereof may be used in combination.

When an organic peroxide-based curing agent is used, it is added in an effective curing amount into the silicone rubber composition, and the amount may be selected appropriately depending on the curing speed. The amount is preferably 0.1 to 10 parts by mass, more preferably 0.2 to 2 parts by mass, based on 100 parts by mass of the component (A). When an organic peroxide-based curing agent is used such that the organic peroxide-based curing agent is added in an amount of 0.1 to 10 parts by mass based on 100 parts by mass of the component (A), this enables sufficient crosslinking while preventing problems, such as scorching and discoloration, and enables cured product formation with sufficient rubber physical properties, such as strength and elongation.

As the addition-reaction curing agent, for example, a combination of an organohydrogenpolysiloxane and a hydrosilylation catalyst can be used.

The organohydrogenpolysiloxane is preferably an organohydrogenpolysiloxane which has at least two, preferably three or more, hydrogen atoms bonded to silicon atoms (hydrosilyl groups) per molecule, and which is liquid at normal temperature and is shown by the following average composition formula (II):

R²_{b}H_{c}SiO_{(4-b-c)/2} (II)

where R²'s are identical or different from one another and each represent an unsubstituted or substituted monovalent hydrocarbon group having 1 to 10 carbon atoms. "b" represents 0.7 to 2.1, "c" represents 0.001 to 1, and b+c is a positive number satisfying 0.8 to 3.

In the formula (II), R²'s are identical to or different from one another and are each an unsubstituted or substituted monovalent hydrocarbon group having 1 to 10 carbon atoms. Specific examples thereof can include alkyl groups, such as a methyl group, an ethyl group, and a propyl group.

Moreover, "b" is the number ranging from 0.7 to 2.1, preferably 0.8 to 2. "c" is the number ranging from 0.001 to 1, preferably 0.01 to 1. b+c is a positive number satisfying 0.8 to 3, preferably 0.9 to 2.7.

The organohydrogenpolysiloxane has, per molecule, at least two (normally 2 to 300), preferably three or more (for example 3 to 200 or so), more preferably four or more (for example 4 to 100 or so), hydrosilyl groups. The hydrosilyl groups may be located at ends of the molecular chain, at sides of the molecular chain, or at both. Moreover, in this organohydrogenpolysiloxane, the number of silicon atoms (or polymerization degree) in a molecule is normally 2 to 300, preferably 3 to 200, more preferably 4 to 100 or so. Further, the viscosity at 25°C may be 0.5 to 1,000 mPa·s, preferably 1 to 500 mPa·s, particularly preferably 5 to 300 mPa·s. Note that this viscosity can be measured with a rotary viscometer (for example, BL-type, BH-type, BS-type, cone plate-type, etc.) (the same applies hereinafter).

When the organohydrogenpolysiloxane is used, the blend amount is preferably 0.1 to 30 parts by mass, more preferably 0.3 to 10 parts by mass, based on 100 parts by mass of the organopolysiloxane of the component (A).

In addition, this organohydrogenpolysiloxane is blended such that a molar ratio of the Si-H groups relative to all the alkenyl groups of the component (A) is preferably in a range of 0.5 to 5, more preferably 0.8 to 3, possibly 1 to 2.5 or so.

When the organohydrogenpolysiloxane is used such that the amount of the organohydrogenpolysiloxane blended is within the aforementioned ranges, it is possible to achieve appropriate crosslinking (appropriate crosslinking density), and form a cured product having excellent rubber physical properties, such as strength and elongation.

Examples of the hydrosilylation catalyst used in the addition-reaction curing agent include platinum group metal catalysts, for example, platinum black, platinum (II) chloride, platinic chloride, reaction products of chloroplatinic acid with monohydric alcohols, complexes of platinic chloride with olefins, platinum bisacetoacetate, palladium-based catalysts, rhodium-based catalysts, etc.

Note that when such a hydrosilylation catalyst is used, the blend amount can be a catalytic amount. Normally, the amount in terms of the mass of the platinum metal is preferably in a range of 0.5 to 1,000 ppm, more preferably 1 to 500 ppm, relative to the component (A).

### [Other Ingredients]

In self-adhesive addition-curable silicone compositions, organohydrogenpolysiloxanes having some alkyl groups substituted with phenyl groups are commonly used. However, phenyl group-containing organopolysiloxanes and organohydrogenpolysiloxanes are likely to ooze (bleed) out from the rubber compound surface, so that the operability with two rolls is considerably low in comparison with phenyl group-free organopolysiloxanes and organohydrogenpolysiloxanes. Hence, the present invention is defined such that the content of an organosilicon compound which has a siloxane bond and a benzene ring per molecule, and which is an ingredient different from the components (A) to (E), is 0 to 0.1 parts by mass. In other words, such organosilicon compounds are not substantially contained.

Further, examples of the organosilicon compound which has a siloxane bond and a benzene ring per molecule, and which is an ingredient different from the components (A) to (E), can also include compounds as follows.

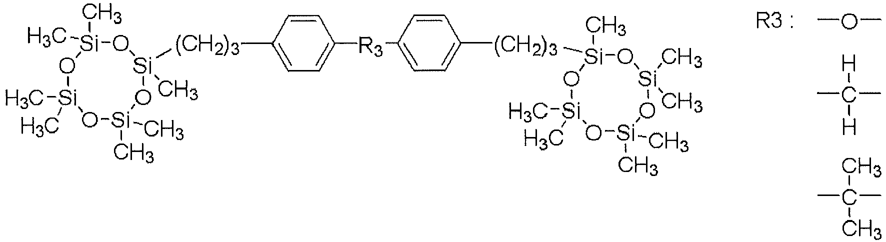

Moreover, the present invention is defined such that the content of an organosilicon compound which has a siloxane bond and an epoxy group per molecule, and which is an ingredient different from the components (A) to (E), is 0 to 0.1 parts by mass. In other words, such organosilicon compounds are not substantially contained. Examples of the organosilicon compound which has a siloxane bond and an epoxy group per molecule, and which is an ingredient different from the components (A) to (E), can include compounds as follows. Nevertheless, the examples do not include hydrolysates incorporated in a small amount in the component (C), or hydrolysates formed when and after mixed with the rubber compound.

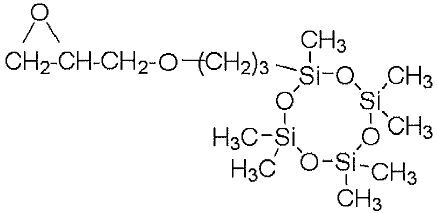

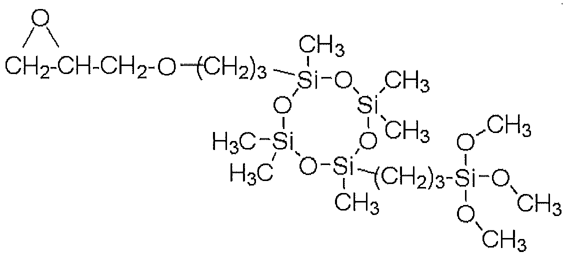

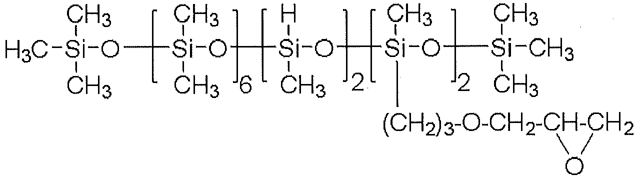

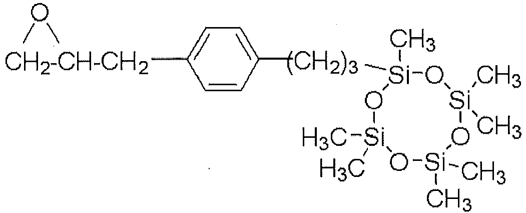

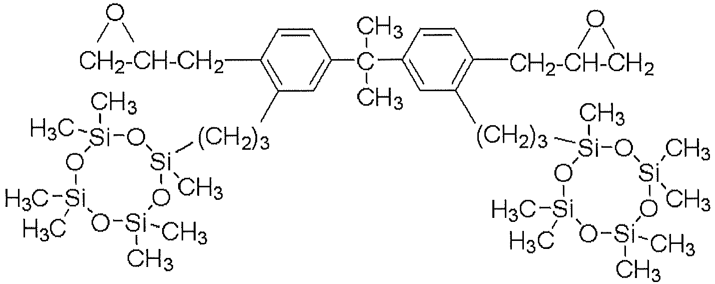

Meanwhile, the inventive silicone rubber composition can also be blended as necessary with other component(s) including: reinforcing agents, such as silicone resins; fillers, such as quartz powder, diatomaceous earth, and calcium carbonate; hydrosilylation reaction regulators, such as nitrogen-containing compounds, acetylene compounds, phosphorus compounds, nitrile compounds, carboxylates, tin compounds, mercury compounds, sulfur compounds, and ethynylcyclohexanol; heat resistance modifier, such as iron oxide and cerium oxide; etc.

### <Curing Method>

The inventive self-adhesive millable silicone rubber composition is cured by heating (heat-curable), and can form a cured product.

The curing temperature and curing time of the inventive self-adhesive millable silicone rubber composition depend on the type of the curing agent of the component (E), but are preferably 100 to 200°C and 10 seconds to 2 hours, more preferably 120 to 200°C and 20 seconds to 30 minutes. After the self-adhesive millable silicone rubber composition is molded on a primer layer (i.e., after primary curing), post curing (secondary curing) is preferably performed in order to improve the adhesion and the compression set of the cured product. The post curing conditions are normally 100 to 220°C and 30 minutes to 100 hours, preferably 120 to 200°C and 1 to 8 hours.

As the molding method, any method may be employed, such as injection molding, compression molding, extrusion molding, and transfer molding. Additionally, to effectively utilize the inventive self-adhesive millable silicone rubber composition, an adherend may be cleaned with an organic solvent or heated (pre-heating) in advance, so that further stable adhesion can be expected.

### <Adhesion Target (Adherend)>

A cured product of the inventive self-adhesive millable silicone rubber composition can favorably adhere to various organic resins and metal substrates. Particularly favorable organic resins include polyamide resins having an amide bond in the molecule, and polyester resins having an ester bond. Particularly favorable metal substrates include stainless steel substrates.

### EXAMPLE

Hereinafter, the present invention will be specifically described with reference to Examples and Comparative Examples. However, the present invention is not limited the following Examples.

### [Preparation of Base Silicone Rubber Compound]

As the component (A), 100 parts by mass of an organopolysiloxane containing 99.9 mol% of a dimethylsiloxane unit, 0.075 mol% of a methylvinylsiloxane unit, and 0.025 mol% of a dimethylvinylsiloxane unit was prepared, which had a weight-average polymerization degree of approximately 6,000 and a vinyl group amount of 1.4×10⁻⁵ mol/g. As the component (B), 25 parts by mass of fumed silica (AEROSIL 200 manufactured by Nippon Aerosil Co., Ltd.) was prepared which had a specific surface area of 200 m²/g according to the BET method. These and surface treatment agents of 4 parts by mass of dimethyldimethoxysilane, 0.15 parts by mass of methylvinyldimethoxysilane, and 1 part by mass of hydrochloric acid (pH=3) were kneaded with a kneader, and heated at 180°C for 1 hour. Thus, a base silicone rubber compound was obtained.

### [Blending of Adhesive Aids]

As the adhesive aids, the following four materials were prepared. By using a two-roll mill, these adhesive aids were blended in the respective amounts shown in Tables 1 to 3 to be described later. In this manner, adhesive-aid blends were obtained.
3-glycidoxypropyltrimethoxysilane...adhesive aid (C) (component (C))
3-isocyanatepropyltriethoxysilane...adhesive aid (D) (component (D))

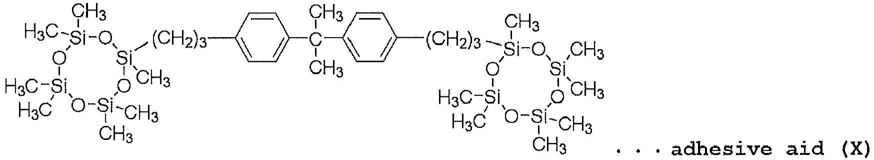

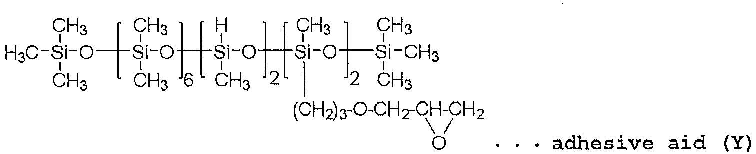

### [Providing of Adhesion Substrates]

From Testpiece Co., Ltd., polybutyl terephthalate (PBT), nylon 6 (PA6), and nylon 66 (PA66) each having a thickness of 2 mm were obtained as organic resin substrates, and a stainless-steel substrate (SUS304) having a thickness of 0.3 mm was obtained as a metal substrate.

### [Roll Blendability]

One roll of a 6-inch two-roll mill was covered with 100 g of the base silicone rubber compound, and one of the adhesive-aid blends having been previously blended in the amounts shown in Tables 1 to 3 was added thereto to check the roll blendability. A case where the sample was hardly transferred to the opposite roll and became uniform within 2 minutes was assessed as "A". A case where the base silicone rubber compound softens or became sticky and took 2 to 5 minutes to become uniform was assessed as "B". A case where it took 5 minutes or longer was assessed as "C". The adhesive-aid blends added to the base silicone rubber compound were designated as adhesive-aid-containing compounds of Examples 1 to 10 and Comparative Examples 2 to 6. The result of assessing the roll blendability of each adhesive-aid-containing compound is shown later in Tables 1 to 3. Note that, in Comparative Example 1, no adhesive aid was added to the base silicone rubber compound.

### [Addition of Addition-Crosslinking Curing Agent]

A two-roll mill was used to blend each of the adhesive-aid-containing compounds of Examples 1 to 10 and Comparative Examples 2 to 6 with: 0.05 parts by mass of a platinum catalyst (Pt concentration: 1 mass%); 0.025 parts of ethynylcyclohexanol as a reaction regulator; and 0.8 parts by mass of a crosslinking agent which was methyl-hydrogen-dimethyl-polysiloxane having two terminals blocked with trimethylsiloxy groups and having 20 Si-H groups on average as side chains (average polymerization degree: 40, Si-H group amount: 0.014 mol/g). These amounts were based on 100 parts by mass of the base silicone rubber compound. In this manner, silicone rubber compositions of Examples 1 to 10 and Comparative Examples 2 to 6 were obtained, in each of which the addition-crosslinking curing agent as the component (E) was added to the adhesive-aid-containing compound.

Moreover, 100 parts by mass of the base silicone rubber compound was blended using a two-roll mill with the same platinum catalyst, reaction regulator, and crosslinking agent as those mentioned above in the same amounts as above. Thus, a silicone rubber composition of Comparative Example 1 was obtained.

### [Adhesion]

Sections each having a thickness of approximately 1 mm were obtained from the silicone rubber compositions of Examples 1 to 10 and Comparative Examples 1 to 6. Thus, rubber compound pieces were obtained. Separately, each of the substrates provided as above was cut into a size of 100 mm×25 mm. After the adhesion surface was wiped with ethyl alcohol, the resultant was heated at 80°C for 30 minutes. On an end portion of the substrate cooled to room temperature, the rubber compound piece cut into 25 mm×12.5 mm was placed. Further, another equivalent substrate was overlaid thereon and pressed by hand. This was put into an oven and heated at 150°C for 30 minutes, so that the rubber compound piece was cured to obtain a test piece. On the next day, the peel strength of the test piece was measured using TENSOMETER 2020 manufactured by Alpha Technologies. Specifically, as the measurement method, two end portions of the test piece were chucked and pulled in opposite directions at a speed of 10 mm/min. The maximum test force was recorded.

Tables 1 to 3 show the test results. Examples 1 to 10, which used none of the adhesive aids (X) and (Y) but used the combination of the adhesive aids (C) and (D), exhibited favorable roll blendability and excellent adhesion to all the substrates. Before broken or peeled, the rubber layers were consequently separated from the chuck (noted as "out" in the tables).

In contrast, Comparative Example 1, which used none of the adhesive aids (C) and (D), exhibited poorer adhesion strength than Examples 1 to 10.

Moreover, in Comparative Examples 2 to 5, which used none of the adhesive aids (C) and (D) but used the adhesive aid(s) (X) and/or (Y), the roll blendability was lower, and the adhesion strength also tended to be low value.

Comparative Example 6 used the adhesive aids (C) and (D) in combination, but the adhesive aid (X) was used, so that the roll blendability was inferior despite excellent adhesion strength.

**[Table 1]**

| | Example 1 | Example 2 | Example 3 | Example 4 | Example 5 | Example 6 |
|---|---|---|---|---|---|---|
| Base silicone rubber compound | 100 | 100 | 100 | 100 | 100 | 100 |
| Added amount of adhesive aid (C) | 0.1 | 0.2 | 0.3 | 0.5 | 1.0 | 2.0 |
| Added amount of adhesive aid (D) | 0.1 | 0.2 | 0.3 | 0.5 | 1.0 | 2.0 |
| Added amount of adhesive aid (X) | | | | | | |
| Added amount of adhesive aid (Y) | | | | | | |
| Curing process | addition | addition | addition | addition | addition | addition |
| Roll blendability | A | A | A | A | A | A |
| Adhesion substrate | PA66 | PA66 | PA66 | PA66 | PA66 | PA66 |
| Adhesion strength [N] | 543 (out) | 570 (out) | 594 (out) | 578 (out) | 587 (out) | 585 (out) |

**[Table 2]**

| | Example 7 | Example 8 | Example 9 | Example 10 |
|---|---|---|---|---|
| Base silicone rubber compound | 100 | 100 | 100 | 100 |
| Added amount of adhesive aid (C) | 3.0 | 0.5 | 0.5 | 0.5 |
| Added amount of adhesive aid (D) | 3.0 | 0.5 | 0.5 | 0.5 |
| Added amount of adhesive aid (X) | | | | |
| Added amount of adhesive aid (Y) | | | | |
| Curing process | addition | addition | addition | addition |
| Roll blendability | A | A | A | A |
| Adhesion substrate | PA66 | PA6 | PBT | SUS |
| Adhesion strength [N] | 594 (out) | 683 (out) | 606 (out) | 521 (out) |

**[Table 3]**

| | Comparative Example 1 | Comparative Example 2 | Comparative Example 3 | Comparative Example 4 | Comparative Example 5 | Comparative Example 6 |
|---|---|---|---|---|---|---|
| Base silicone rubber compound | 100 | 100 | 100 | 100 | 100 | 100 |
| Added amount of adhesive aid (C) | | | | | | 0.5 |
| Added amount of adhesive aid (D) | | | | | | 0.5 |
| Added amount of adhesive aid (X) | | 0.8 | | | 0.8 | 0.8 |
| Added amount of adhesive aid (Y) | | | 0.5 | 0.5 | 0.5 | |
| Curing process | addition | addition | addition | addition | addition | addition |
| Roll blendability | - | C | B | B | C | C |
| Adhesion substrate | PA66 | PA66 | PA66 | PA66 | PA66 | PA66 |
| Adhesion strength [N] | 247 | 203 | 248 | 248 | 380 | 571 (out) |

(In Tables 1 to 3 above, the blending amount of each component is expressed by "parts by mass" which was based on 100 parts by mass of the base silicone rubber compound)

### <Examples 11 to 20: Organic-Peroxide Crosslinking>

A two-roll mill was used to blend each of the adhesive-aid-containing compounds used in Examples 1 to 10 with 0.5 parts by mass of 2,5-dimethyl-2,5-bis(t-butyl peroxy)hexane in place of the addition-crosslinking curing agent. The amount was based on 100 parts by mass of the base silicone rubber compound. In this manner, silicone rubber compositions of Examples 11 to 20 were obtained, in each of which the organic peroxide as the component (E) was added to the adhesive-aid-containing compound.

The adhesion of each of the silicone rubber compositions of Examples 11 to 20 was tested in the same procedure as described above. As a result, the silicone rubber compositions of Examples 11 to 20 containing the organic-peroxide curing agent as the component (E) also exhibited excellent adhesion to all the substrates similarly to the silicone rubber compositions of Examples 1 to 10 containing the addition-crosslinking curing agent. Furthermore, the rubber layers were consequently separated from the chuck, before broken or peeled.

From the foregoing, the compositions of Examples 1 to 20 according to the present invention were excellent in roll blendability, that is, excellent in productivity, and successfully formed cured products excellent in adhesion to organic resin and metal by any of addition crosslinking and organic-peroxide crosslinking.

It should be noted that the present invention is not limited to the above-described embodiments. The embodiments are just examples, and any embodiments that substantially have the same feature and demonstrate the same functions and effects as those in the technical concept disclosed in claims of the present invention are included in the technical scope of the present invention.

## Claims

1. A self-adhesive millable silicone rubber composition comprising:
100 parts by mass of (A) an organopolysiloxane having at least two alkenyl groups bonded to silicon atoms per molecule and an average polymerization degree of 100 or more;
5 to 50 parts by mass of (B) a reinforcing silica having a specific surface area of 50 m²/g or more;
0.1 to 5 parts by mass of (C) an organosilicon compound having an epoxy group and an alkoxy group per molecule;
0.1 to 5 parts by mass of (D) an organosilicon compound having an isocyanate group and an alkoxy group per molecule; and
an effective curing amount of (E) a curing agent,
wherein a content of an organosilicon compound which has a siloxane bond and a benzene ring per molecule, and which is an ingredient different from the components (A) to (E), is 0 to 0.1 parts by mass, and
a content of an organosilicon compound which has a siloxane bond and an epoxy group per molecule, and which is an ingredient different from the components (A) to (E), is 0 to 0.1 parts by mass.

2. The self-adhesive millable silicone rubber composition according to claim 1, wherein the component (C) is one or more selected from 3-glycidoxypropylmethyldimethoxysilane, 3-glycidoxypropylmethyldiethoxysilane, 3-glycidoxypropyltrimethoxysilane, and 3-glycidoxypropyltriethoxysilane.

3. The self-adhesive millable silicone rubber composition according to claim 1 or 2, wherein the component (D) is one or more selected from 3-isocyanatepropylmethyldimethoxysilane, 3-isocyanatepropylmethyldiethoxysilane, 3-isocyanatepropyltrimethoxysilane, and 3-isocyanatepropyltriethoxysilane.

4. The self-adhesive millable silicone rubber composition according to any one of claims 1 to 3, wherein the component (E) is an organic peroxide.

5. The self-adhesive millable silicone rubber composition according to any one of claims 1 to 3, wherein the component (E) is a combination of an organohydrogenpolysiloxane and a platinum group metal catalyst.

6. The self-adhesive millable silicone rubber composition according to any one of claims 1 to 5, wherein an adhesion target comprises any one or more of polyamide resins, polyester resins, and stainless steels.
